(19) Europäisches Patentamt
European Patent Office
Office européen des brevets

(11) **EP 3 281 339 B1**

(12) **EUROPEAN PATENT SPECIFICATION**

(45) Date of publication and mention
of the grant of the patent:
**03.06.2020 Bulletin 2020/23**

(51) Int Cl.:
**H04L 5/00** $^{(2006.01)}$

(21) Application number: **16715634.8**

(22) Date of filing: **06.04.2016**

(86) International application number:
**PCT/IB2016/051950**

(87) International publication number:
**WO 2016/162803 (13.10.2016 Gazette 2016/41)**

(54) **ADAPTIVE TRANSMISSION METHODS FOR UPLINK CONTROL INFORMATION**

VERFAHREN ZUR ADAPTIVEN ÜBERTRAGUNG VON UPLINK-STEUERINFORMATIONEN

PROCÉDÉS DE TRANSMISSION ADAPTATIVE POUR DES INFORMATIONS DE COMMANDE DE LIAISON MONTANTE

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 09.04.2015 PCT/CN2015/076162
14.08.2015 PCT/CN2015/087000

(43) Date of publication of application:
**14.02.2018 Bulletin 2018/07**

(73) Proprietor: **Telefonaktiebolaget LM Ericsson (publ)**
**164 83 Stockholm (SE)**

(72) Inventors:
• **LI, Shaohua**
**Beijing 100102 (CN)**
• **LIU, Jinhua**
**Beijing 100102 (CN)**
• **SONG, Xinghua**
**Beijing 100102 (CN)**
• **FAN, Rui**
**Beijing 100102 (CN)**
• **LU, Qianxi**
**Beijing 100102 (CN)**

(74) Representative: **Ericsson**
**Patent Development**
**Torshamnsgatan 21-23**
**164 80 Stockholm (SE)**

(56) References cited:
**US-A1- 2013 114 472    US-A1- 2014 098 780**

• **SAMSUNG: "HARQ-ACK and Periodic CSI Multiplexing", 3GPP DRAFT; R1-120149 A_N_CSI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20120206 - 20120210, 31 January 2012 (2012-01-31), XP050562719, [retrieved on 2012-01-31]**
• **NOKIA NETWORKS ET AL: "PUCCH Enhancements for Carrier Aggregation Enhancement Beyond 5 Carriers", 3GPP DRAFT; R1-150454, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20150209 - 20150213 30 January 2015 (2015-01-30), XP050948667, Retrieved from the Internet: URL:http://www.3gpp.org/ftp/tsg_ran/WG1_RL 1/TSGR1_80/Docs/ [retrieved on 2015-01-30]**
• **TEXAS INSTRUMENTS: "Finalizing details of periodic CSI and HARQ-ACK on PUCCH Format 3", 3GPP DRAFT; R1-124133 FINALIZING DETAILS OF PERIODIC CSI AND HARQ-ACK ON PUCCH FORMAT 3, 3RD GENERATION PARTNERSHIP PROJECT (3GPP), MOBILE COMPETENCE CENTRE ; 650, ROUTE DES LUCIOLES ; F-06921 SOPHIA- , vol. RAN WG1, no. San Diego, USA; 20121008 - 20121012 29 September 2012 (2012-09-29), XP050662042, Retrieved from the Internet: URL:http://www.3gpp.org/ftp/tsg_ran/WG1_RL 1/TSGR1_70b/Docs/ [retrieved on 2012-09-29]**

**Description**

Related Applications

This application claims the benefit of Patent Cooperation Treaty (PCT) patent application serial number PCT/CN2015/076162, filed April 9, 2015 and PCT patent application serial number PCT/CN2015/087000, filed August 14, 2015.

Technical Field

The disclosed subject matter relates generally to telecommunications, and more particularly to transmission of uplink control information in wireless telecommunications systems.

Background

Carrier Aggregation (CA) for Long Term Evolution (LTE) was introduced in Release 10 (Rel-10) of the Third Generation Partnership Project (3GPP) specification, and was subsequently enhanced in Release 11 (Rel-11). The use of CA can increase peak data rates, system capacity, and user experience by aggregating radio resources from multiple carriers. The multiple carriers may reside in the same band or different bands and, for the case of interband Time Division Duplexing (TDD) CA, may be configured with different uplink/downlink (UL/DL) configurations. In Release 12 (Rel-12), CA between TDD and Frequency Division Duplexing (FDD) serving cells is introduced to support User Equipment devices (UEs) connecting to the serving cells simultaneously.

In Release 13 (Rel-13), Licensed-Assisted Access (LAA) has attracted significant interest in extending the LTE CA feature towards capturing spectrum opportunities of unlicensed spectrum in the 5 gigahertz (GHz) band. Wireless Local Access Networks (WLANs) operating in the 5 GHz band currently support 80 megahertz (MHz) in the field and 160 MHz is to follow in Wave 2 deployment of IEEE 802.11ac. There are also other frequency bands, such as 3.5 GHz, where aggregation of more than one carrier on the same band is possible, in addition to the bands already widely in use for LTE. Considering that there is plenty of spectrum in 5 GHz and 3.5 GHz and the large aggregated bandwidth for Wi-Fi, it is important for LTE to enable the utilization of at least similar bandwidths for LTE in combination with LAA as IEEE 802.11ac Wave 2, which means extending the CA framework to support more than five carriers. The extension of the CA framework beyond five carriers was approved to be one work item for LTE Rel-13. The objective is to support up to 32 carriers in both UL and DL.

Compared to single carrier operation, a UE operating with CA may report feedback for more than one DL Component Carrier (CC). Meanwhile, a UE does not need to support DL and UL CA simultaneously. For instance, the first release of CA capable UEs in the market only supports DL CA but not UL CA. This is also the underlying assumption in the 3GPP Radio Access Network 4 (RAN4) standardization. Therefore, an enhanced UL control channel, i.e. Physical UL Control Channel (PUCCH) format 3, was introduced for CA during the Rel-10 timeframe. However, to support more CCs in Rel-13, the UL control channel capacity becomes a limitation. US2014/0098780A1 discloses a technique of subframe bundling for transmitting a channel containing the same data with a different redundancy version in a predetermined number of consecutive subframes in the time domain. However, a UE may be configured to operate in a slot mode wherein the UE employs slot bundling instead of subframe bundling.

US2013114472 A1 discloses a method that enables relay node uplink control information transmission on an interface between a relay node and a donor in one or more subframes.

Summary

Aspects of the present invention are as defined in the independent claims, reference to which should now be made. Optional features are defined in the dependent claims. Systems and methods relating to control channel transmission in a cellular communications network that are particularly well-suited for use with, but not limited to, Carrier Aggregation (CA) with a large number of Component Carriers (CCs) are disclosed. The invention is defined by the appended claims. The embodiments that do not fully fall under the scope of the claims have to be interpreted as examples useful for understanding the invention.

Those skilled in the art will appreciate the scope of the present disclosure and realize additional aspects thereof after reading the following detailed description of the embodiments in association with the accompanying drawing figures.

Brief Description of the Drawings

The accompanying drawing figures incorporated in and forming a part of this specification illustrate several aspects of the disclosure, and together with the description serve to explain the principles of the disclosure.

Figure 1 illustrates an example of a communication system illustrating a problem with conventional Physical Uplink Control Channel (PUCCH) transmission, particularly for a cell-edge User Equipment device (UE) configured with a large number of Component Carriers (CCs) (e.g., up to 32 CCs);

Figure 2 illustrates an example communications network (e.g., a Long Term Evolution (LTE) network) in which embodiments of the present disclosure may be implemented;

Figure 3 illustrates a wireless communication device in accordance with some embodiments of the present disclosure;

Figure 4 illustrates a radio access node in accordance with some embodiments of the present disclosure;

Figure 5 is a diagram illustrating method steps for switching transmission for control channel information based on current operating conditions in accordance with some embodiments of the present disclosure;

Figure 6 illustrates the operation of a wireless communication device and a radio access node in accordance with some embodiments of the present disclosure in which the radio access node transmits an indicator to the wireless communication device that indicates that the wireless communication device is to change, or switch, a transmission method, or scheme, utilized by the wireless communication device for PUCCH transmission;

Figure 7 illustrates the operation of a wireless communication device and a radio access node in accordance with some embodiments of the present disclosure in which the wireless communication device makes a decision to change, or switch, a transmission method, or scheme, utilized by the wireless communication device for PUCCH transmission;

Figure 8 is a block diagram of a virtualized embodiment of a radio access node according to some embodiments of the present disclosure;

Figure 9 is a block diagram of a radio access node according to some other embodiments of the present disclosure; and

Figure 10 is a block diagram of a wireless communication device according to some embodiments of the present disclosure.

Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure and the accompanying claims.

**Radio Node:** As used herein, a "radio node" is either a radio access node or a wireless device.

**Radio Access Node:** As used herein, a "radio access node" is any node in a radio access network of a cellular communications network that operates to wirelessly transmit and/or receive signals. Some examples of a radio access node include, but are not limited to, a base station (e.g., an enhanced or evolved Node B (eNB) in a Third Generation Partnership Project (3GPP) Long Term Evolution (LTE) network), a high power or macro base station, a low power base station (e.g., a micro base station, a pico base station, a home eNB, or the like), and a relay node.

**Wireless Device:** As used herein, a "wireless device" is any type of device that has access to (i.e., is served by) a cellular communications network by wirelessly transmitting and/or receiving signals to a radio access node(s). Some examples of a wireless device include, but are not limited to, a User Equipment device (UE) in a 3GPP LTE network and a Machine Type Communication (MTC) device.

**Network Node:** As used herein, a "network node" is any node that is either part of the radio access network or the core network of a cellular communications network/system.

Note that the description given herein focuses on a 3GPP cellular communications system and, as such, 3GPP LTE terminology or terminology similar to 3GPP LTE terminology is oftentimes used. However, the concepts disclosed herein are not limited to a 3GPP system.

Note that, in the description herein, reference may be made to the term "cell;" however, particularly with respect to Fifth Generation (5G) concepts, beams may be used instead of cells and, as such, it is important to note that the concepts described herein are equally applicable to both cells and beams.

In 3GPP Technical Specification (TS) 36.213 V10.0.1, section 5.1.2.1, the setting of UE transmit power $P_{PUCCH}$ for Physical Uplink Control Channel (PUCCH) transmission in subframe i is defined by:

$$P_{PUCCH}(i) = \min \begin{cases} P_{CMAX,c}(i) \\ P_{0\_PUCCH} + PL_c + h(n_{CQI}, n_{HARQ}, n_{SR}) + \Delta_{F\_PUCCH}(F) + \Delta_{TxD}(F') + g(i) \end{cases} dBm$$

where

- $P_{CMAX,c}(i)$ is the configured UE transmit power defined in 3GPP TS 36.101 V11.0.0 in subframe "i" for serving cell "c."
- $P_{0\_PUCCH}$ is a parameter provided by higher layers.
- $PL_c$ is the downlink (DL) pathloss estimate calculated in the UE for serving cell "c."
- The parameter $\Delta_{F\_PUCCH}(F)$ is provided by higher layers.
- If the UE is configured by higher layers to transmit PUCCH on two antenna ports, the value of $\Delta_{TxD}(F')$ is provided by higher layers.
- $g(i)$ is the current PUCCH power control adjustment state.
- $h(n_{CQI}, n_{HARQ}, n_{SR})$ is a PUCCH format dependent value, where $n_{CQI}$ corresponds to the number of information bits for the channel quality information defined in subclause 5.2.3.3 in 3GPP TS 36.212 V10.2.0.

For PUCCH format 3 and when the UE transmits Hybrid Automatic Repeat Request (HARQ) Acknowledgement (ACK) / Scheduling Request (SR) (HARQ-ACK/SR) and periodic Channel State Information (CSI):

- If the UE is configured by higher layers to transmit PUCCH format 3 on two antenna ports, or if the UE transmits more than 11 bits of HARQ-ACK/SR and CSI:

$$h(n_{CQI}, n_{HARQ}, n_{SR}) = \frac{n_{HARQ} + n_{SR} + n_{CQI} - 1}{3}$$

- Otherwise,

$$h(n_{CQI}, n_{HARQ}, n_{SR}) = \frac{n_{HARQ} + n_{SR} + n_{CQI} - 1}{2}$$

In LTE Release 8 (Rel-8), PUCCH format 1/1a/1b and PUCCH format 2/2a/2b are supported for SR, HARQ-ACK, and periodic CSI reporting. The PUCCH resource is represented by a single scalar index, from which the phase rotation and the orthogonal cover sequence (only for PUCCH format 1/1a/1b) are derived. The use of a phase rotation of a cell specific sequence together with orthogonal sequences provides orthogonally between different terminals in the same cell transmitting PUCCH on the same set of resource blocks. In LTE Release 10 (Rel-10), PUCCH format 3 was introduced for Carrier Aggregation (CA) and Time Division Duplexing (TDD), when there are multiple DL transmissions (either on multiple carriers or multiple downlink subframes), but single uplink (UL) (either on a single carrier or a single UL subframe) for HARQ-ACK, SR, and CSI feedback.

Similarly, the PUCCH format 3 resource is also represented by a single scalar index from which the orthogonal sequence and the resource block number can be derived. A length-5 orthogonal sequence is applied for PUCCH format 3 to support code multiplexing within one resource block pair (see 3GPP TS 36.211) and a length-4 orthogonal sequence is applied for shorted PUCCH. Denoting the PUCCH format 3 resource $n_{PUCCH}^{(3)}$, the resource block number of the PUCCH format 3 resource m is determined by the following

$$m = \left\lceil n_{PUCCH}^{(3)} \middle/ N_{SF,0}^{PUCCH} \right\rceil$$

where $N_{SF,0}^{PUCCH}$ is the length of the orthogonal sequence for slot 0.

The orthogonal sequence applied for the two slots are derived by the following

$$n_{oc,0} = n_{PUCCH}^{(3)} \bmod N_{SF,1}^{PUCCH}$$

$$n_{oc,1} = \begin{cases} \left(3n_{oc,0}\right) \bmod N_{SF,1}^{PUCCH} & \text{if } N_{SF,1}^{PUCCH} = 5 \\ n_{oc,0} \bmod N_{SF,1}^{PUCCH} & \text{otherwise} \end{cases}$$

where $N_{SF,1}^{PUCCH}$ is the length of the orthogonal sequence for slot 1, where $N_{SF,0}^{PUCCH} = N_{SF,1}^{PUCCH} = 5$ holds for both slots in a subframe using normal PUCCH format 3 while $N_{SF,0}^{PUCCH} = N_{SF,1}^{PUCCH} = 4$ holds for the first slot and second slot in a subframe using shortened PUCCH format 3.

The PUCCH format 3 resource is determined according to higher layer configuration and a dynamic indication from the DL assignment. In detail, the Transmitted Power Control (TPC) field in the Downlink Control Information (DCI) format of the corresponding Physical Downlink Control Channel (PDCCH)/ Enhanced PDCCH (ePDCCH) (PDCCH/ePDCCH) is used to determine the PUCCH resource value from one of the four resource values configured by higher layers, with the mapping defined in Table 1 (see 3GPP TS 36.213). For Frequency Division Duplexing (FDD), the TPC field corresponds to the PDCCH/ePDCCH for the scheduled secondary serving cells. For TDD, the TPC field corresponds to the PDCCH/ePDCCH for the primary cell with Downlink Assignment Index (DAI) value in the PDCCH/ePDCCH larger than '1.' A UE shall assume that the same PUCCH resource values are transmitted in each DCI format of the corresponding PDCCH/ePDCCH assignments.

Table 1: PUCCH Resource Value for HARQ-ACK Resource for PUCCH

| Value of 'TPC command for PUCCH' or 'HARQ-ACK resource offset' | $n_{PUCCH}^{(3,\tilde{p})}$ |
|---|---|
| '00' | The 1st PUCCH resource value configured by the higher layers |
| '01' | The 2nd PUCCH resource value configured by the higher layers |
| '10' | The 3rd PUCCH resource value configured by the higher layers |
| '11' | The 4th PUCCH resource value configured by the higher layers |

For up to 32 DL Component Carriers (CCs), there are up to 64 HARQ ACKs/Negative Acknowledgements (NACKs) at one time (rank >= 2) depending on the number of configured DL CCs for FDD. For TDD, the number of HARQ ACK/NACK bits to be fed back depends on the number of configured CCs and UL/DL subframe configuration of the DL CCs. Assume there are 32 DL CCs with UL/DL subframe configuration 2 and transmission mode 3, there are up to 256 (32 * 4 * 2) HARQ ACK/NACK bits. Assuming ½ coding rate and Quadrature Phase Shift Keying (QPSK) modulation are applied, FDD needs at least 32 Resource Elements (REs) while TDD needs at least 256 REs (32 symbols for FDD and 128 symbols for TDD respectively if the bundling is applied between two codewords).

In 3GPP up to Release 12 (Rel-12), the maximum DL CCs are 5. PUCCH format 1b with channel selection and PUCCH format 3 are introduced for HARQ feedback and corresponding fallback operations are defined. The fallback operation is beneficial not only from the HARQ-ACK performance perspective but is also useful for the UE during the transition period. However, in Release 13 (Rel-13), the maximum 32 DL CCs can be configured for one UE and hence a new PUCCH format will be introduced to carry more HARQ-ACK bits due to the aggregation of 32 DL CCs.

Currently, there are three design options to support larger payload size on PUCCH:

- Option 1: PUCCH format 3 with multiple Physical Resource Block (PRBs)
- Option 2: PUCCH format 3 with multiple Orthogonal Cover Codes (OCCs)
- Option 3: PUCCH format 3 with both multiple PRBs and OCCs

As discussed above, for up to 32 DL CCs, there are up to 256 HARQ ACK/NACKs at one time for some CC configurations. If the PUCCH format 3 power control equation is reused *directly* compared with PUCCH format 1a, the power offset is:

$$h\left(n_{CQI}, n_{HARQ}, n_{SR}\right) = \frac{256}{3} = 85 \text{ dB}$$

The above equation may be not directly applicable for the new format design. With some new format designs, as described above, the power offset may be determined as follows.

$$10 * log10\left(\frac{256}{22}\right) + \frac{22}{3} = 17.99 \, dB$$

In the above equation, assume that 22 bits are carried in one PUCCH format 3, 256/22 format 3 PUCCHs are used to carry the total 256 bits, and the same performance is achieved as with PUCCH format 1a. This power boost is comparable with the scale between transmitted 100 PRB and 1 PRB, which is a 20 decibel (dB) power difference. With so large power boost, it may lead to the power of many UEs based on

$$P_{calculated} = P_{0\_PUCCH} + PL_c + h\left(n_{CQI}, n_{HARQ}, n_{SR}\right) + \Delta_{F\_PUCCH}(F) + \Delta_{TxD}(F') + g(i)$$

exceeding the maximum transmitted power $P_{CMAX,c}(i)$.

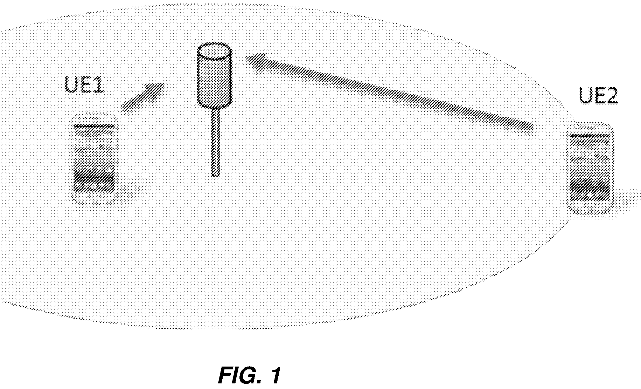

As an example, Figure 1 illustrates a system in which there are two UEs in the system where one UE (UE1) is very close to the eNB and the other UE (UE2) is on the border of the cell. For UE1, because it is very close to the eNB, the pathloss $PL_c$ is relatively small; and for UE2, the pathloss $PL_c$ is very large. For UE2, $P_{calculated}$ is with higher probability to exceed the maximum transmitted power $P_{CMAX,c}(i)$. Hence, for UE2, it is a challenge to maintain the UL control channel transmission with required quality. If there is no reliable HARQ ACK/NACK feedback, it may have great impact on the DL performance. The disclosed embodiments provide methods that address this problem.

In consideration of the above, certain embodiments of the disclosed subject matter improve the control channel transmission efficiency for CA operation with a large number of CCs. In some embodiments, a network node, e.g. an eNB, transmits an indicator to instruct a UE to switch transmission methods for control channel information based on current operating conditions. Such embodiments can potentially improve the UL control channel transmission efficiency for the Further Enhancement of CA (FeCA), reduce the impact of PUCCH quality on the Physical downlink Shared Channel (PDSCH) performance, and conserve UE power. In conventional approaches, for cell edge UEs, PUCCH cannot be reliably detected. Without reliable PUCCH detection, many retransmissions may occur. In some worst cases, it will trigger many higher layer retransmissions, which will waste resources.

In case the channel quality of the CCs have strong correlation, less ACK/NACK bits are possible. With less ACK/NACK feedback bits, fewer resources will be expected to carry these ACK/NACK bits. Consequently, less power is needed to achieve the same target Signal to Interference plus Noise Ratio (SINR), so UE power can be saved.

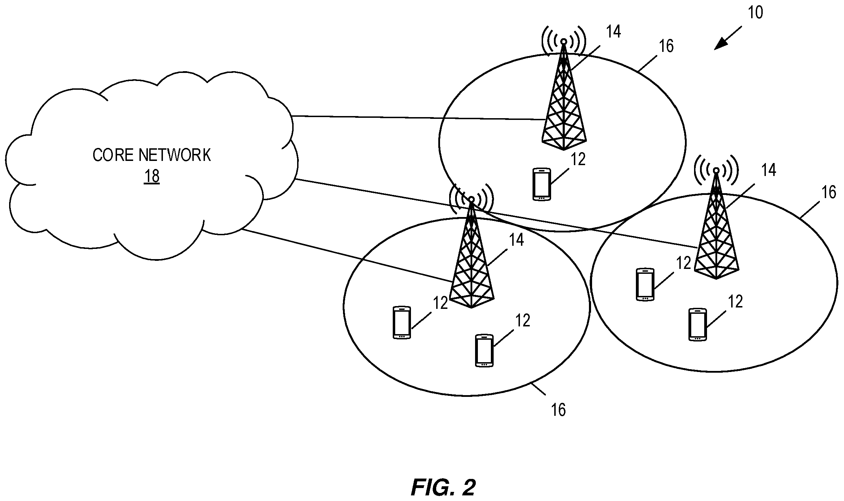

The described embodiments may be implemented in any appropriate type of communication system supporting any suitable communication standards and using any suitable components. As one example, certain embodiments may be implemented in an LTE network, such as that illustrated in Figure 2. Referring to Figure 2, a communication network 10 (which as an example is an LTE network) comprises a plurality of wireless communication devices 12 (e.g., conventional UEs, MTC / Machine-to-Machine (M2M) UEs) and a plurality of radio access nodes 14 (e.g., eNBs or other base stations). The communication network 10 is organized into cells 16, which are connected to a core network 18 via the corresponding radio access nodes 14. The radio access nodes 14 are capable of communicating with the wireless communication devices 12 and may also include any additional elements suitable to support communication between the wireless communication devices 12 or between a wireless communication device 12 and another communication device (such as a landline telephone).

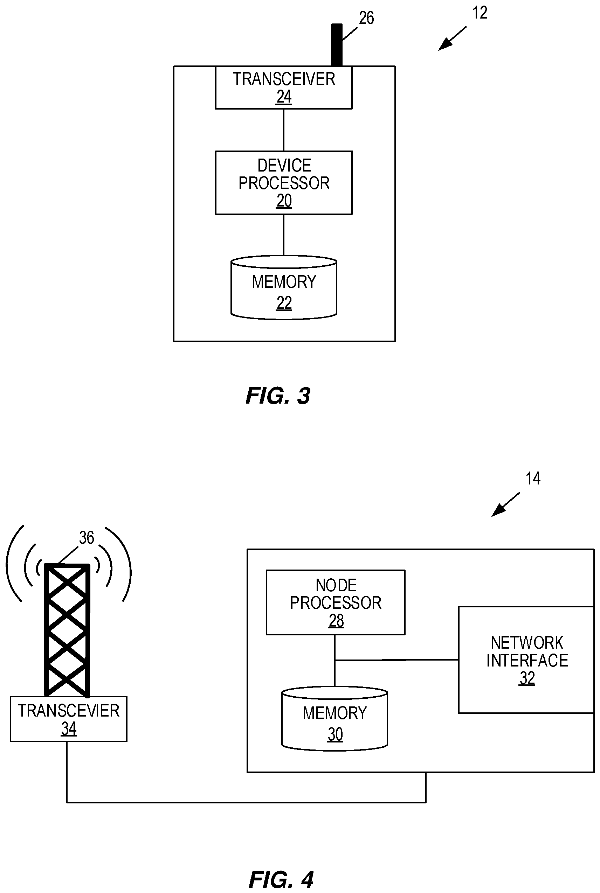

Although the wireless communication devices 12 may represent communication devices that include any suitable combination of hardware and/or software, these wireless communication devices 12 may, in certain embodiments, represent devices such as an example wireless communication device 12 illustrated in greater detail by Figure 3. Similarly, although the illustrated radio access node 14 may represent network nodes that include any suitable combination of hardware and/or software, these nodes may, in particular embodiments, represent devices such as the example radio access node 14 illustrated in greater detail by Figure 4.

Referring to Figure 3, the wireless communication device 12 comprises a processor 20 (which may include, e.g., one or more Central Processing Units (CPUs), one or more Application Specific Integrated Circuits (ASICs), one or more Field Programmable Gate Arrays (FPGAs), or the like, or any combination thereof), memory 22, a transceiver 24, and an antenna 26. In certain embodiments, some or all of the functionality described herein as being provided by UEs, MTC or M2M devices, and/or any other types of wireless communication devices 12 may be provided by the processor 20 executing instructions stored on a computer-readable medium, such as the memory 22 shown in Figure 3. Alternative embodiments may include additional components beyond those shown in Figure 3 that may be responsible for providing certain aspects of the wireless communication device's functionality, including any of the functionality described herein.

Referring to Figure 4, the radio access node 14 comprises a node processor 28 (which may include, e.g., one or more CPUs, one or more ASICs, one or more FPGAs, or the like, or any combination thereof), memory 30, a network interface 32, a transceiver 34, and an antenna 36. In certain embodiments, some or all of the functionality described herein as being provided by a base station, a node B, an eNB, and/or any other type of network node may be provided by the processor 28 executing instructions stored on a computer-readable medium, such as the memory 30 shown in Figure 4. Alternative embodiments of the radio access node 14 may comprise additional components to provide additional functionality, such as the functionality described herein and/or related supporting functionality.

As indicated above, certain embodiments of the disclosed subject matter improve UL control channel transmission efficiency for CA operation with large number of CCs. In the description that follows, Uplink Control Information (UCI) over PUCCH is presented as one example. Similar concepts can also be applied for UCI over Physical uplink Shared Channel (PUSCH). Those of skill in the art may readily extend the application to the UCI transmission over PUSCH.

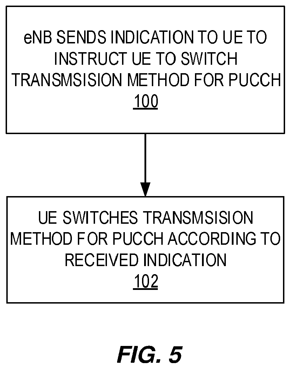

In general, the described embodiments switch transmission methods for control channel information based on current operating conditions. The switching may be controlled by the radio access node 14 transmitting an indication to the wireless communication device 12 as illustrated in Figure 5. In the example of Figure 5, the radio access node 14 is an eNB, and the wireless communication device 12 is a UE. The switching may be implemented in any of various alternative ways as described below with reference to the various disclosed embodiments. As illustrated, the eNB sends an indication to the UE to instruct the UE to switch, or change, the transmission method, or transmission scheme, utilized by the UE for PUCCH transmission (step 100). Upon receiving the indication, the UE switches, or changes, the transmission method, or transmission scheme, utilized by the UE for PUCCH transmission in accordance with the received indication (step 102).

In a first embodiment, the radio access node 14 sends an indication to the wireless communication device 12 to instruct the wireless communication device 12 to switch the transmission methods for PUCCH. Again, for the following discussion, the radio access node 14 is an eNB, and the wireless communication device 12 is a UE; however, the eNB is only one example of a radio access node 14 and the UE is only one example of a wireless communication device 12.

In a first variant of the first embodiment, switching the transmission methods for PUCCH comprises the following features:

- Changing a payload size carried by the PUCCH, and/or
  ∘ For the UE whose signal quality cannot maintain the high payload PUCCH transmission, the payload can be reduced. Several schemes can be used for the payload reduction according to the indication from the eNB, including bundling schemes, such as spatial domain bundling, and/or frequency bundling, and/or time domain bundling.

    ▪ As a first example:

    - Indicator = 1, bundling is used
    - Indicator = 0, no bundling is used.

    ▪ As a second example:

    - Indicator = 101, UE performs spatial domain bundling only
    - Indicator = 110, UE performs spatial domain bundling first and then frequency domain bundling
    - Indicator = 111, UE performs spatial domain bundling first, frequency domain bundling second, and time domain bundling third

  Any bundling scheme or any combination of the bundling scheme can be used for payload reduction. It may also include some source coding schemes, such as data compression schemes. With some source coding schemes, the efficient feedback bits can be reduced.

- Changing the resource carrying the PUCCH, and/or
  ∘ The indicator of PUCCH payload adjustment may result in resource changing in PRBs, and/or OCCs, and/or the allocated power, or other related resource to change PUCCH transmission in order to reach the desired SINR for PUCCH.

    ▪ For the UE whose signal quality cannot support the high payload PUCCH transmission, the payload can be reduced following the indicator. With the payload decrease, the number of time-frequency resources, and/or OCCs, and/or the allocated transmit power may be reduced and the desired SINR can be reached. Or

- For the UE whose signal quality is sufficient to support high payload PUCCH transmission, the payload may be increased to provide more detailed HARQ ACK/NACK feedback. With the payload increase, the number of time-frequency resources, and/or OCCs, and/or the allocated transmit power may be increased in order to reach the desired SINR

- Changing the Modulation and Coding Scheme (MCS)
  ∘ With the payload change and the resource change according to the indicator, the MCS may be changed accordingly as well. For example, when the payload is higher than a threshold, convolution code may be used. With the reduction of the payload, other coding schemes may be more efficient, such as Reed-Muller code.

In a second variant of the first embodiment, the transmitter (i.e., the eNB or more generally the radio access node 14) sends the indication based on the gap between the reached SINR and the desired SINR. Here, the "reached SINR" is the actual SINR (i.e., the SINR actually achieved when targeting the desired SINR) at the eNB for signals received from the UE, which may be less than the desired, or target, SINR. If the desired SINR cannot be achieved using power control, for instance, reached SINR - desired SINR < threshold 1, the UE may be identified as a problem UE whose channel quality is not good enough. As such, the eNB can send an indication to the UE to reduce its payload size for PUCCH. Otherwise, if the desired SINR can be well achieved or exceeded, for instance, reached SINR - desired SINR > threshold 2, the eNB can send an indication to the UE to use a larger payload size for PUCCH.

In a third variant of the first embodiment, the transmitter (i.e., the eNB or more generally the radio access node 14) sends the indication based on a Power Headroom Report (PHR). If the PHR is smaller than the given threshold, the transmitter may send the indication to instruct the UE to use smaller payload size so that less power resources are used for PUCCH transmission. Otherwise, if the PHR is larger than another given threshold, the transmitter may send the indication to instruct the UE to use larger payload size and allocate more transmit power for PUCCH transmission.

In a fourth variant of the first embodiment, the transmitter (i.e., the eNB or more generally the radio access node 14) sends the indication according to the configuration of the CCs. The configuration comprises the number of CCs, the carrier type of each CC, and the allocation of each CC. As one example, there are two types of CCs, one is a licensed carrier and one is an unlicensed carrier. If there are many unlicensed carriers, the requirement on the number of feedback bits may be not so tight and, thus, the payload of PUCCH may be expected to be reduced. In this case, the smaller payload size and less resource PUCCH may be used. In this case, the transmitter may indicate to the receiver (i.e., the UE or more generally the wireless communication device 12) that the receiver is to use the transmission methods with smaller payload size and/or less resources. Otherwise, the transmitter may indicate to the receiver that the receiver is to use transmission methods with large payload size and/or more resources.

In a fifth variant of the first embodiment, the indication is signaled by higher layer signaling. It may also be possible to signal the indication by Medium Access Control (MAC) Control Element (CE) or physical layer signaling (for instance, PDCCH order or one field in the DL scheduling DCI). The indication may be semi-statically (e.g., via higher layer signaling) configured, and/or the indication may be dynamically signaled (e.g., via MAC CE or physical layer signaling).

In a sixth variant of the first embodiment, the eNB sends the indicator, but the UE may miss the indicator. If the UE misses the indicator, this is not known by the eNB. In this case, the eNB may use an enhancement for PUCCH detection. One possible enhancement is to perform multiple blind detections based on all or partial hypothetic assumptions about the transmission methods for PUCCH. The eNB performs blind detection until the right information is obtained (i.e., until the PUCCH transmission from the UE is detected).

In a second embodiment, the eNB does not send the indicator, and the UE makes a decision by itself on the transmission methods for PUCCH based on predefined rules. In this case, from the eNB side, the eNB may perform blind detection on the transmission methods based on the predefined rules. As one example, different payloads may be used for the UE, and the eNB may try to use different hypothesis for the payload and decode the PUCCH until the right information is obtained. As another alternative, the PUCCH format indicator can be transmitted by the UE along with the PUCCH information. The eNB will first decode the PUCCH format indicator and then decode the corresponding PUCCH transmission.

In a third embodiment, the method performed by the receiver (i.e., the UE or more generally the wireless communication device 12) which adjusts the PUCCH transmission according to the received indication from the eNB comprises the following features:

- Receiving the indication to switch the transmission methods for PUCCH

- Switching the transmission method based on the indication

In a fourth embodiment, the terminal (i.e., the UE or more generally the wireless communication device 12) switches the transmission method for PUCCH by itself based on the operation condition according to preconfigured rules by the eNB. For example, power limitation based rules may be configured as follows:

- Rule 1: if the transmitted power given based on the equation (*see* $P_{calculated}$ given above) exceeds the maximum transmission power, the terminal may select the transmission methods with smaller payload size and/or less resources for PUCCH transmission. Otherwise, the terminal may use transmission methods with larger payload size and/or more resources for PUCCH transmission. Here, the resource may be the number of time-frequency resources, and/or OCCs, and/or the allocated transmit power, as discussed above.

- Rule 2: the UE can keep monitoring the power headroom; if the power headroom is lower than a first threshold, the UE can reduce the payload size; and if the power headroom is higher than a second threshold, the UE can increase the payload size by reducing the bundling.

As an alternative example, transmission-bits-based rules may be configured as follows. A plurality of intervals (of the number of bits) may be predefined, and a number of PRBs may be determined based on an interval in which the number of information bits falls. For example, two intervals could be defined as [0 64] and [64 128], where one PRB is used if the number of information bits is less than 64 bits and two PRBs are used if the number of information bits is larger than 64 bits.

In a variant of the fourth embodiment, where the transmitted power given on the equation (see $P_{calculated}$ given above) is larger than a given threshold, the transmission methods for PUCCH may be switched.

In another variant of the fourth embodiment, the UE indicates if the PUCCH transmission method is changed using one predefined field in UCI, e.g., this indicator can either be encoded together with the PUCCH transmission or separately. On the eNB side, the eNB determines how to interpret the received HARQ ACK bit according to said field.

In a fifth embodiment, the UE supports both the third embodiment and the fourth embodiment at the same time. For example, if the UE receives the indication, the UE may have the behavior according to the third embodiment. Otherwise, if the UE does not receive the indication, UE may take action according to the fourth embodiment.

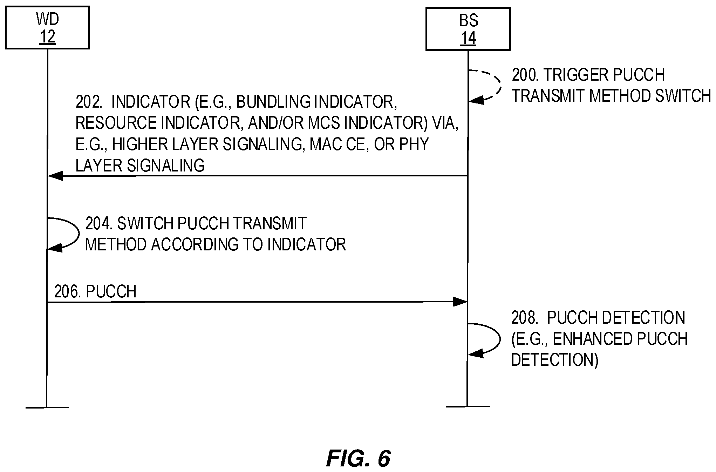

Figure 6 illustrates the operation of the wireless communication device (WD) 12 and the radio access node 14 (which for this example is a base station (BS) 14) according to some of the embodiments described above. As illustrated, optionally (i.e., in some embodiments), the base station 14 triggers a change, or switching, of the transmission method, or scheme, utilized by the wireless communication device 12 (step 200). As discussed above, this trigger may be in response to current operating conditions such as, e.g., the gap between the achieved SINR and the desired SINR, a PHR from the wireless communication device 12, the CC configuration for the wireless communication device 12, or the like, or any combination thereof.

The base station 14 (e.g., in response to the trigger of step 200) sends an indicator, or indication, to the wireless communication device 12 that indicates that the wireless communication device 12 is to switch, or change, the transmission method, or scheme, utilized by the wireless communication device 12 for PUCCH transmission (step 202). As discussed above, in some embodiments, the indicator may be or include a bundling indicator (i.e., an indication that the wireless communication device 12 is to switch the PUCCH transmission scheme to use some type(s) of bundling for, e.g., HARQ-ACK feedback). For example, the indicator may indicate that spatial domain bundling is to be used (i.e., spatial domain bundling of, e.g., HARQ-ACKs). As discussed above, time domain and/or frequency domain bundling may additionally or alternatively be indicated. In some embodiments, the indicator may additionally or alternatively indicate that there is to be a change in resources used by the wireless communication device 12 for PUCCH transmission. For example, the indicator may indicate that the PUCCH transmission scheme is to be changed to use a greater number of time-frequency resources (e.g., PRBs) or a lesser number of time-frequency resources (e.g., PRBs). For instance, the indicator may indicate the number of time-frequency resources (e.g., PRBs) to be utilized for PUCCH transmission. In some embodiments, the indicator may additionally or alternatively indicate a change in a MCS utilized for PUCCH transmission.

Upon receiving the indication, the wireless communication device 12 changes, or switches, the transmission method, or scheme, utilized by the wireless communication device 12 for PUCCH transmission in accordance with the indicator (step 204). For example, if the indicator is an indication that bundling (e.g., spatial domain bundling) is to be used, then the wireless communication device 12 changes the PUCCH transmission scheme to use bundling as indicated by the indicator. As another example, if the indicator is an indication of the number of time-frequency resources (e.g., PRBs) to be used for PUCCH transmission, then the wireless communication device 12 changes the PUCCH transmission scheme to use the indicated number of time-frequency resources. The wireless communication device 12 then transmits a PUCCH transmission to the base station 14 in accordance with the changed, or switched, PUCCH transmission scheme (step 206).

At the base station 14, the base station 14 operates to detect the PUCCH transmission from the wireless communication device 12 (step 208). In some embodiments, the base station 14 may utilize an enhanced PUCCH detection scheme (e.g., blind decoding for multiple hypotheses in the event that the wireless communication device 12 may not have received the indicator).

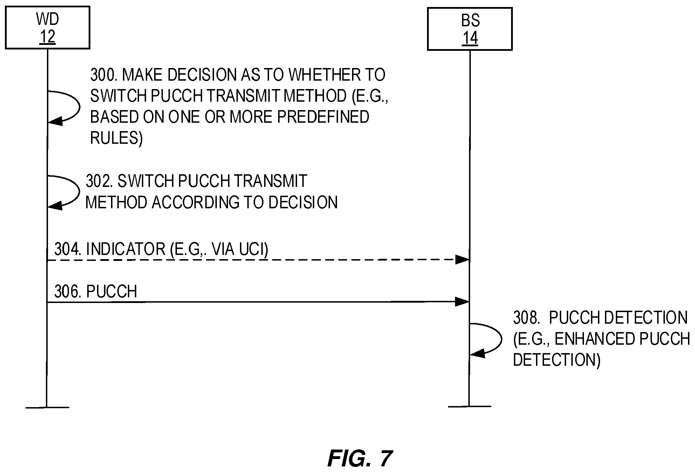

Figure 7 illustrates the operation of the wireless communication device (WD) 12 and the radio access node 14 (which for this example is a base station (BS) 14) according to some other embodiments described above. Here, the wireless communication device 12 makes a decision on its own as to whether to change, or switch, the PUCCH transmission method, or scheme, utilized by the wireless communication device 12, as described above. As illustrated, the wireless communication device 12 makes a decision to change, or switch, the PUCCH transmission method, or scheme, utilized by the wireless communication device 12, e.g., based on one or more predefined rules, as described above (step 300). Upon making the decision to change, or switch, the PUCCH transmission scheme, the wireless communication device 12 changes the PUCCH transmission scheme (step 302). For example, as discussed above, the wireless communication device 12 changes the PUCCH transmission scheme to use bundling (e.g., spatial domain bundling, frequency domain bundling, and/or time domain bundling), change the resources used for PUCCH transmission (e.g., change the number of time-frequency resources used), and/or change the MCS used for the PUCCH transmission scheme. The wireless communication device 12 then optionally (i.e., in some embodiments) transmits an indicator of the changed PUCCH transmission scheme (e.g., in UCI) and transmits a PUCCH transmission to the base station 14 in accordance with the changed, or switched, PUCCH transmission scheme (steps 304 and 306). While illustrated separately, in some embodiments, the indicator is included in the PUCCH transmission such that the base station 14 will first decode the indicator and then decode the rest of the PUCCH transmission in accordance with the indicator.

At the base station 14, the base station 14 operates to detect the PUCCH transmission from the wireless communication device 12 (step 308). In some embodiments, particularly where the base station 14 is not aware of the changed PUCCH transmission scheme, the base station 14 may utilize an enhanced PUCCH detection scheme (e.g., blind decoding for multiple hypotheses in the event that the wireless communication device 12 may not have received the indicator), as described above.

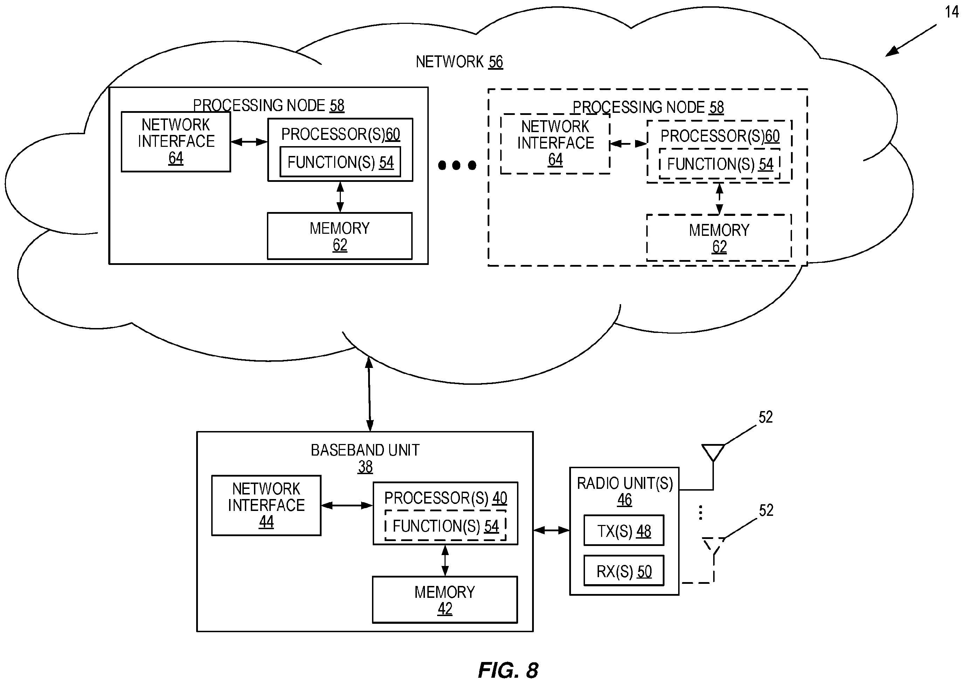

Figure 8 is a schematic block diagram that illustrates a virtualized embodiment of the base station 14 (or more generally the radio access node 14) according to some embodiments of the present disclosure. This discussion is equally applicable to other types of radio access nodes. Further, other types of network nodes may have similar architectures (particularly with respect to including processor(s), memory, and a network interface).

As used herein, a "virtualized" radio access node is a radio access node in which at least a portion of the signal processing (e.g., baseband signal processing and/or signal processing) of the radio access node is implemented as a virtual component (e.g., via a virtual machine(s) executing on a physical processing node(s) in a network(s)). As illustrated, the base station 14 includes a baseband unit 38 that includes the one or more processors 40 (e.g., CPUs, ASICs, FPGAs, and/or the like), memory 42, and a network interface 44 as well as the one or more radio units 46 that each includes one or more transmitters 48 and one or more receivers 50 coupled to one or more antennas 52. Note that the components of the baseband unit 38 correspond to the respective components (i.e., the processor 28, the memory 30, and network interface 32) of the base station 14 of Figure 4, and the radio unit(s) 46 correspond to the transceiver 34 of Figure 4. The baseband unit 38 is connected to the radio unit(s) 46 via, for example, an optical cable or the like. The baseband unit 38 is connected to one or more processing nodes 58 coupled to or included as part of a network(s) 56 via the network interface 44. Each processing node 58 includes one or more processors 60 (e.g., CPUs, ASICs, FPGAs, and/or the like), memory 62, and a network interface 64.

In this example, functions 54 of the base station 14 described herein are implemented at the one or more processing nodes 58 or distributed across the baseband unit 38 and the one or more processing nodes 58 in any desired manner. In some particular embodiments, some or all of the functions 54 of the base station 14 described herein are implemented as virtual components executed by one or more virtual machines implemented in a virtual environment(s) hosted by the processing node(s) 58. As will be appreciated by one of ordinary skill in the art, additional signaling or communication between the processing node(s) 58 and the baseband unit 38 in order to carry out at least some of the desired functions is provided. Notably, in some embodiments, the baseband unit 38 may not be included, in which case the radio unit(s) 46 communicate directly with the processing node(s) 58 via an appropriate network interface(s).

In some embodiments, a computer program including instructions which, when executed by at least one processor, causes the at least one processor to carry out the functionality of the base station 14 (or more generally a radio access node) or a node (e.g., a processing node 58 implementing one or more of the functions 54 of the radio access node in a virtual environment) according to any of the embodiments described herein is provided. In some embodiments, a carrier containing the aforementioned computer program product is provided. The carrier is one of an electronic signal, an optical signal, a radio signal, or a computer readable storage medium (e.g., a non-transitory computer readable medium such as memory).

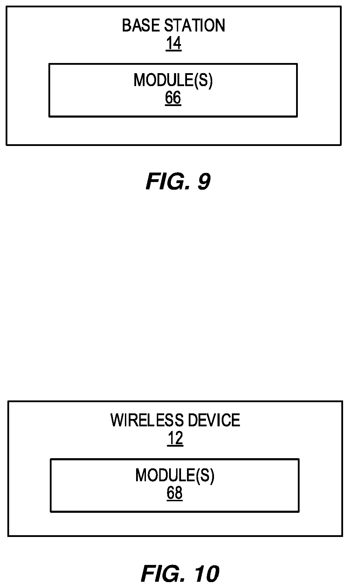

Figure 9 illustrates the base station 14 according to some other embodiments of the present disclosure. As illustrated, the base station 14 (or more generally the radio access node 14) includes one or more modules 66, each of which is implemented in software. In some embodiments, the one or more modules 66 include an indicator transmission module that operates to transmit an indicator to the wireless communication device 12, as described above. The one or more modules 66 also include a PUCCH detection module that operates to detect a PUCCH transmission from the wireless communication device 12, as described above.

Figure 10 illustrates the wireless communication device 12 according to some other embodiments of the present disclosure. As illustrated, the wireless communication device 12 includes one or more modules 68, each of which is implemented in software. In some embodiments, the one or more modules 68 include an indicator reception module that operates to receive an indicator from the base station 14, as described above. In other embodiments, the one or more modules 68 include a decision module that operates to make a decision as to whether to change, or switch, the PUCCH transmission scheme, as described above. The one or more modules 68 also include a switching module that operates to change, or switch, the PUCCH transmission scheme in accordance with either the indicator received from the base station 14 or the decision made by the wireless communication device 12, depending on the particular embodiment. The one or more modules 68 also include a PUCCH transmission module that operates to transmit (via an associated transceiver, which is not shown) a PUCCH transmission using the changed PUCCH transmission scheme, as described above.

The following acronyms are used throughout this disclosure.

- 3GPP       Third Generation Partnership Project
- 5G         Fifth Generation
- ACK        Acknowledgement
- ASIC       Application Specific Integrated Circuit
- CA         Carrier Aggregation
- CC         Component Carrier
- CE         Control Element
- CPU        Central Processing Unit
- CSI        Channel State Information
- DAI        Downlink Assignment Index
- dB         Decibel
- DCI        Downlink Control Information
- DL         Downlink
- eNB        Enhanced or Evolved Node B
- ePDCCH     Enhanced Physical Downlink Control Channel
- FDD        Frequency Division Duplexing
- FeCA       Further Enhanced Carrier Aggregation
- FPGA       Field Programmable Gate Array
- GHz        Gigahertz
- HARQ       Hybrid Automatic Repeat Request
- LAA        License-Assisted Access
- LTE        Long Term Evolution
- M2M        Machine-to-Machine
- MAC        Medium Access Control
- MCS        Modulation and Coding Scheme
- MHz        Megahertz
- MTC        Machine Type Communication
- NACK       Negative Acknowledgement
- OCC        Orthogonal Cover Code
- PDCCH      Physical Downlink Control Channel
- PDSCH      Physical Downlink Shared Channel
- PHR        Power Headroom Report
- PRB        Physical Resource Block
- PUCCH      Physical Uplink Control Channel
- PUSCH      Physical Uplink Shared Channel
- QPSK       Quadrature Phase Shift Keying
- RAN        Radio Access Network
- RE         Resource Element
- Rel-8      Release 8
- Rel-10     Release 10
- Rel-11     Release 11
- Rel-12     Release 12

- Rel-13      Release 13
- SINR       Signal to Interference plus Noise Ratio
- SR         Scheduling Request
- TDD        Time Division Duplexing
- TPC        Transmitter Power Control
- TS         Technical Specification
- UCI        Uplink Control Information
- UE         User Equipment
- UL         Uplink
- WLAN       Wireless Local Area Network


**Claims**

1.    A method of operation of a radio access node (14) in a cellular communications network (10), comprising:

in response to a trigger based on current operating conditions, transmitting (202) a bundling indicator to a wireless device (12) that indicates that a transmit scheme utilized by the wireless device (12) for transmission of an uplink control channel is to be changed,
wherein the bundling indicator indicates that the transmit scheme is to use a bundling scheme comprising spatial domain bundling,
wherein the trigger is one or more of a group consisting of: a gap between an achieved Signal to Interference plus Noise Ratio, SINR, for uplink transmission from the wireless device (12) to the radio access node (14) and a desired SINR; a Power Headroom Report, PHR, received from the wireless device (12); and a component carrier configuration for the wireless device (12).

2.    The method of claim 1 further comprising detecting (208) a transmission of the uplink control channel from the wireless device (12).

3.    The method of claim 2 wherein detecting (208) the transmission of the uplink control channel from the wireless device (12) comprises attempting to blindly decode the transmission of the uplink control channel using multiple hypotheses regarding a transmission scheme used by the wireless device (12) for the uplink control channel.

4.    The method according to claim 1, 2 or 3 wherein the bundling scheme further comprises at least one of frequency domain bundling and time domain bundling.

5.    The method of any of claims 1-4 wherein the bundling indicator results in a change in a number of resources used by the transmit scheme utilized by the wireless device (12) for transmission of the uplink control channel.

6.    The method of any of claims 1-4 wherein the bundling indicator indicates that a number of time-frequency resources used for the transmit scheme utilized by the wireless device (12) for transmission of the uplink control channel is to be changed.

7.    A radio access node (14) for a cellular communications network (10), comprising:

a transceiver (34);
a processor (28); and
memory (30) storing instructions executable by the processor (28) whereby the radio access node (14) is operable to:

in response to a trigger based on current operating conditions, transmit, via the transceiver (34), a bundling indicator to a wireless device (12) that indicates that a transmit scheme utilized by the wireless device (12) for transmission of an uplink control channel is to be changed, wherein the bundling indicator indicates that the transmit scheme is to use a bundling scheme comprising spatial domain bundling,
wherein the trigger is one or more of a group consisting of: a gap between an achieved Signal to Interference plus Noise Ratio, SINR, for uplink transmission from the wireless device (12) to the radio access node (14) and a desired SINR; a Power Headroom Report, PHR, received from the wireless device (12); and a component carrier configuration for the wireless device (12).

8. The radio access node (14) of claim 7 wherein the bundling scheme further comprises at least one of frequency domain bundling and time domain bundling.

9. The radio access node (14) of claim 7 wherein the bundling indicator results in a change in a number of resources used by the transmit scheme utilized by the wireless device (12) for transmission of the uplink control channel.

10. The radio access node (14) of claim 7 wherein the bundling indicator indicates that a number of time-frequency resources used for the transmit scheme utilized by the wireless device (12) for transmission of the uplink control channel is to be changed.

11. The radio access node (14) of claim 7, further comprising
means for detecting a transmission of the uplink control channel from the wireless device (12).

12. A computer program comprising instructions which, when executed on at least one processor, cause the at least one processor to carry out the method according to any one of claims 1-6.

13. A method of operation of a wireless device (12) in a cellular communications network (10), comprising:

receiving (202) a bundling indicator transmitted from a base station (14) in response to a trigger based on current operating conditions, the bundling indicator indicating that a transmit scheme utilized by the wireless device (12) for transmission of an uplink control channel is to be changed; and
upon receiving the bundling indicator, changing (204) the transmit scheme utilized by the wireless device (12) for transmission of the uplink control channel in accordance with the bundling indicator, wherein the bundling indicator indicates that the transmit scheme is to use a bundling scheme comprising spatial domain bundling; wherein the trigger is one or more of a group consisting of: a gap between an achieved Signal to Interference plus Noise Ratio, SINR, for uplink transmission from the wireless device (12) to the radio access node (14) and a desired SINR; a Power Headroom Report, PHR, received from the wireless device (12); and a component carrier configuration for the wireless device (12).

14. A wireless device (12) enabled to operate in a cellular communications network (10), comprising:

a transceiver (24);
a processor (20); and
memory (22) storing instructions executable by the processor (20) whereby the wireless device (12) is operable to:

receive, via the transceiver (24), a bundling indicator transmitted from a base station (14) in response to a trigger based on current operating conditions, the bundling indicator indicating that a transmit scheme utilized by the wireless device (12) for transmission of an uplink control channel is to be changed; and
upon receiving the indicator, change the transmit scheme utilized by the wireless device (12) for transmission of the uplink control channel in accordance with the bundling indicator, wherein the bundling indicator indicates that the transmit scheme is to use a bundling scheme comprising spatial domain bundling; wherein the trigger is one or more of a group consisting of: a gap between an achieved Signal to Interference plus Noise Ratio, SINR, for uplink transmission from the wireless device (12) to the radio access node (14) and a desired SINR; a Power Headroom Report, PHR, received from the wireless device (12); and a component carrier configuration for the wireless device (12).

15. A computer program comprising instructions which, when executed on at least one processor, cause the at least one processor to carry out the method according to claim 13.

**Patentansprüche**

1. Verfahren zum Betrieb eines Funkzugangsknotens (14) in einem zellularen Kommunikationsnetzwerk (10), umfassend:

Senden (202) eines Bündelungsindikators an eine drahtlose Vorrichtung (12), der anzeigt, dass ein Sendeschema geändert werden soll, das von der drahtlosen Vorrichtung (12) zur Übertragung eines Uplink-Steuerkanals verwendet wird, in Reaktion auf einen Auslöser, der auf aktuellen Betriebsbedingungen basiert, wobei der Bündelungsindikator anzeigt, dass das Sendeschema ein Bündelungsschema verwenden soll, das Raumdomänenbündelung umfasst, wobei es sich bei dem Auslöser um eines oder mehrere aus einer Gruppe handelt, die besteht aus: einer Diskrepanz zwischen einem erreichten Signal-zu-Interferenz-plus-Rausch-Verhältnis, SINR, für Uplink-Übertragung von der drahtlosen Vorrichtung (12) an den Funkzugangsknoten (14) und einem gewünschten SINR; einer Leistungsreservemeldung, PHR, die von der drahtlosen Vorrichtung (12) empfangen wird, und einer Komponententrägerkonfiguration für die drahtlose Vorrichtung (12).

2. Verfahren nach Anspruch 1, ferner umfassend ein Erkennen (208) einer Übertragung des Uplink-Steuerkanals von der drahtlosen Vorrichtung (12).

3. Verfahren nach Anspruch 2, wobei das Erkennen (208) der Übertragung des Uplink-Steuerkanals von der drahtlosen Vorrichtung (12) ein Versuchen umfasst, die Übertragung des Uplink-Steuerkanals unter Verwendung mehrerer Hypothesen bezüglich eines Übertragungsschemas, das von der drahtlosen Vorrichtung (12) für den Uplink-Steuerkanal verwendet wird, blind zu decodieren.

4. Verfahren nach Anspruch 1, 2 oder 3, wobei das Bündelungsschema ferner mindestens eine von einer Frequenzdomänenbündelung und einer Zeitdomänenbündelung umfasst.

5. Verfahren nach einem der Ansprüche 1 bis 4, wobei der Bündelungsindikator zu einer Änderung einer Anzahl von Ressourcen führt, die vom Sendeschema verwendet wird, das von der drahtlosen Vorrichtung (12) zur Übertragung des Uplink-Steuerkanals verwendet wird.

6. Verfahren nach einem der Ansprüche 1 bis 4, wobei der Bündelungsindikator anzeigt, dass eine Anzahl von Zeit-/Frequenz-Ressourcen, die für das Sendeschema verwendet wird, das von der drahtlosen Vorrichtung (12) zur Übertragung des Uplink-Steuerkanals verwendet wird, geändert werden soll.

7. Funkzugangsknoten (14) für ein zellulares Kommunikationsnetzwerk (10), umfassend:

   einen Sendeempfänger (34);
   einen Prozessor (28); und
   einen Speicher (30), der Anweisungen speichert, die vom Prozessor (28) ausgeführt werden können, wodurch der Funkzugangsknoten (14) ausgelegt ist zum:

   Senden eines Bündelungsindikators, der anzeigt, dass ein Sendeschema geändert werden soll, das von der drahtlosen Vorrichtung (12) zur Übertragung eines Uplink-Steuerkanals verwendet wird, in Reaktion auf einen Auslöser, der auf aktuellen Betriebsbedingungen basiert, über den Sendeempfänger (34) an eine drahtlose Vorrichtung (12), wobei der Bündelungsindikator anzeigt, dass das Sendeschema ein Bündelungsschema verwenden soll, das Raumdomänenbündelung umfasst, wobei es sich bei dem Auslöser um eines oder mehrere aus einer Gruppe handelt, die besteht aus: einer Diskrepanz zwischen einem erreichten Signal-zu-Interferenz-plus-Rausch-Verhältnis, SINR, für Uplink-Übertragung von der drahtlosen Vorrichtung (12) an den Funkzugangsknoten (14) und einem gewünschten SINR; einer Leistungsreservemeldung, PHR, die von der drahtlosen Vorrichtung (12) empfangen wird, und einer Komponententrägerkonfiguration für die drahtlose Vorrichtung (12).

8. Funkzugangsknoten (14) nach Anspruch 7, wobei das Bündelungsschema ferner mindestens eine von einer Frequenzdomänenbündelung und einer Zeitdomänenbündelung umfasst.

9. Funkzugangsknoten (14) nach Anspruch 7, wobei der Bündelungsindikator zu einer Änderung einer Anzahl von Ressourcen führt, die vom Sendeschema verwendet wird, das von der drahtlosen Vorrichtung (12) zur Übertragung des Uplink-Steuerkanals verwendet wird.

10. Funkzugangsknoten (14) nach Anspruch 7, wobei der Bündelungsindikator anzeigt, dass eine Anzahl von Zeit-/Frequenz-Ressourcen, die für das Sendeschema verwendet wird, das von der drahtlosen Vorrichtung (12) zur Übertragung des Uplink-Steuerkanals verwendet wird, geändert werden soll.

**11.** Funkzugangsknoten (14) nach Anspruch 7, ferner umfassend:
Mittel zum Erkennen einer Übertragung des Uplink-Steuerkanals von der drahtlosen Vorrichtung (12).

**12.** Computerprogramm, umfassend Anweisungen, die bei Ausführung auf mindestens einem Prozessor den mindestens einen Prozessor zum Durchführen des Verfahrens nach einem der Ansprüche 1 bis 6 veranlassen.

**13.** Verfahren zum Betrieb einer drahtlosen Vorrichtung (12) in einem zellularen Kommunikationsnetzwerk (10), umfassend:

Empfangen (202) eines Bündelungsindikators von einer Basisstation (14) in Reaktion auf einen Auslöser, der auf aktuellen Betriebsbedingungen basiert, wobei der Bündelungsindikator anzeigt, dass ein Sendeschema, das von der drahtlosen Vorrichtung (12) zur Übertragung eines Uplink-Steuerkanals verwendet wird, geändert werden soll; und
Ändern (204) des Sendeschemas, das von der drahtlosen Vorrichtung (12) zur Übertragung des Uplink-Steuerkanals verwendet wird, bei Empfang des Bündelungsindikators gemäß dem Bündelungsindikator, wobei der Bündelungsindikator anzeigt, dass das Sendeschema ein Bündelungsschema verwenden soll, das Raumdomänenbündelung umfasst;
wobei es sich bei dem Auslöser um eines oder mehrere aus einer Gruppe handelt, die besteht aus: einer Diskrepanz zwischen einem erreichten Signal-zu-Interferenz-plus-Rausch-Verhältnis, SINR, für Uplink-Übertragung von der drahtlosen Vorrichtung (12) an den Funkzugangsknoten (14) und einem gewünschten SINR; einer Leistungsreservemeldung, PHR, die von der drahtlosen Vorrichtung (12) empfangen wird, und einer Komponententrägerkonfiguration für die drahtlose Vorrichtung (12).

**14.** Drahtlose Vorrichtung (12), die zum Betrieb in einem zellularen Kommunikationsnetz (10) befähigt ist und umfasst:

einen Sendeempfänger (24);
einen Prozessor (20); und
einen Speicher (22), der Anweisungen speichert, die vom Prozessor (20) ausgeführt werden können, wodurch die drahtlose Vorrichtung (12) ausgelegt ist zum:

Empfangen eines Bündelungsindikators von einer Basisstation (14) über den Sendeempfänger (24) in Reaktion auf einen Auslöser, der auf aktuellen Betriebsbedingungen basiert, wobei der Bündelungsindikator anzeigt, dass ein Sendeschema, das von der drahtlosen Vorrichtung (12) zur Übertragung eines Uplink-Steuerkanals verwendet wird, geändert werden soll; und
Ändern des Sendeschemas, das von der drahtlosen Vorrichtung (12) zur Übertragung des Uplink-Steuerkanals verwendet wird, bei Empfang des Indikators gemäß dem Bündelungsindikator, wobei der Bündelungsindikator anzeigt, dass das Sendeschema ein Bündelungsschema verwenden soll, das Raumdomänenbündelung umfasst;
wobei es sich bei dem Auslöser um eines oder mehrere aus einer Gruppe handelt, die besteht aus: einer Diskrepanz zwischen einem erreichten Signal-zu-Interferenz-plus-Rausch-Verhältnis, SINR, für Uplink-Übertragung von der drahtlosen Vorrichtung (12) an den Funkzugangsknoten (14) und einem gewünschten SINR; einer Leistungsreservemeldung, PHR, die von der drahtlosen Vorrichtung (12) empfangen wird, und einer Komponententrägerkonfiguration für die drahtlose Vorrichtung (12).

**15.** Computerprogramm, umfassend Anweisungen, die bei Ausführung auf mindestens einem Prozessor den mindestens einen Prozessor zum Durchführen des Verfahrens nach Anspruch 13 veranlassen.

**Revendications**

**1.** Procédé de fonctionnement d'un nœud d'accès radio (14) dans un réseau de communication cellulaire (10), comprenant :

en réponse à un déclenchement sur la base de conditions de fonctionnement actuelles, la transmission (202) d'un indicateur de regroupement à destination d'un dispositif sans fil (12) qui indique qu'un schéma de transmission utilisé par le dispositif sans fil (12) pour une transmission d'un canal de commande de liaison montante doit être changé,
dans lequel l'indicateur de regroupement indique que le schéma de transmission doit utiliser un schéma de regroupement comprenant un regroupement dans le domaine spatial,
dans lequel le déclenchement est un ou plusieurs d'un groupe se composant de : un écart entre un rapport de signal sur interférence plus bruit, SINR, obtenu pour une transmission de liaison montante depuis le dispositif sans fil (12) au nœud d'accès radio (14) et un SINR souhaité ; un rapport de marge de puissance, PHR, reçu en provenance du dispositif sans fil (12) ; et une configuration de porteuse composante pour le dispositif sans fil (12).

2. Procédé selon la revendication 1, comprenant en outre la détection (208) d'une transmission du canal de commande de liaison montante depuis le dispositif sans fil (12).

3. Procédé selon la revendication 2, dans lequel la détection (208) de la transmission du canal de commande de liaison montante depuis le dispositif sans fil (12) comprend une tentative de décodage à l'aveugle de la transmission du canal de commande de liaison montante en utilisant de multiples hypothèses relatives à un schéma de transmission utilisé par le dispositif sans fil (12) pour le canal de commande de liaison montante.

4. Procédé selon la revendication 1, 2 ou 3, dans lequel le schéma de regroupement comprend en outre au moins l'un d'un regroupement dans le domaine de fréquence et d'un regroupement dans le domaine de temps.

5. Procédé selon l'une quelconque des revendications 1 à 4, dans lequel l'indicateur de regroupement engendre un changement d'un nombre de ressources utilisées par le schéma de transmission utilisé par le dispositif sans fil (12) pour une transmission du canal de commande de liaison montante.

6. Procédé selon l'une quelconque des revendications 1 à 4, dans lequel l'indicateur de regroupement indique qu'un nombre de ressources de temps-fréquence utilisées pour le schéma de transmission utilisé par le dispositif sans fil (12) pour une transmission du canal de commande de liaison montante doit être changé.

7. Nœud d'accès radio (14) pour un réseau de communication cellulaire (10), comprenant :

un émetteur-récepteur (34) ;
un processeur (28) ; et
une mémoire (30) stockant des instructions exécutables par le processeur (28) de telle manière que le nœud d'accès radio (14) soit utilisable pour :

en réponse à un déclenchement sur la base de conditions de fonctionnement actuelles, transmettre, par l'intermédiaire de l'émetteur-récepteur (34), un indicateur de regroupement à destination d'un dispositif sans fil (12) qui indique qu'un schéma de transmission utilisé par le dispositif sans fil (12) pour une transmission d'un canal de commande de liaison montante doit être changé,
dans lequel l'indicateur de regroupement indique que le schéma de transmission doit utiliser un schéma de regroupement comprenant un regroupement dans le domaine spatial,
dans lequel le déclenchement est un ou plusieurs d'un groupe se composant de : un écart entre un rapport de signal sur interférence plus bruit, SINR, obtenu pour une transmission de liaison montante depuis le dispositif sans fil (12) au nœud d'accès radio (14) et un SINR souhaité ; un rapport de marge de puissance, PHR, reçu en provenance du dispositif sans fil (12) ; et une configuration de porteuse composante pour le dispositif sans fil (12).

8. Nœud d'accès radio (14) selon la revendication 7, dans lequel le schéma de regroupement comprend en outre au moins l'un d'un regroupement dans le domaine de fréquence et d'un regroupement dans le domaine de temps.

9. Nœud d'accès radio (14) selon la revendication 7, dans lequel l'indicateur de regroupement engendre un changement d'un nombre de ressources utilisées par le schéma de transmission utilisé par le dispositif sans fil (12) pour une transmission du canal de commande de liaison montante.

10. Nœud d'accès radio (14) selon la revendication 7, dans lequel l'indicateur de regroupement indique qu'un nombre de ressources de temps-fréquence utilisées pour le schéma de transmission utilisé par le dispositif sans fil (12) pour une transmission du canal de commande de liaison montante doit être changé.

11. Nœud d'accès radio (14) selon la revendication 7, comprenant en outre
des moyens pour la détection d'une transmission du canal de commande de liaison montante depuis le dispositif sans fil (12).

12. Programme informatique comprenant des instructions qui, lorsqu'elles sont exécutées sur au moins un processeur, amènent l'au moins un processeur à effectuer le procédé selon l'une quelconque des revendications 1 à 6.

13. Procédé de fonctionnement d'un dispositif sans fil (12) dans un réseau de communication cellulaire (10), comprenant :

la réception (202) d'un indicateur de regroupement transmis depuis une station de base (14) en réponse à un déclenchement sur la base de conditions de fonctionnement actuelles, l'indicateur de regroupement indiquant qu'un schéma de transmission utilisé par le dispositif sans fil (12) pour une transmission d'un canal de commande de liaison montante doit être changé ; et
à la réception de l'indicateur de regroupement, le changement (204) du schéma de transmission utilisé par le dispositif sans fil (12) pour une transmission du canal de commande de liaison montante en fonction de l'indicateur de regroupement, dans lequel l'indicateur de regroupement indique que le schéma de transmission doit utiliser un schéma de regroupement comprenant un regroupement dans le domaine spatial,
dans lequel le déclenchement est un ou plusieurs d'un groupe se composant de : un écart entre un rapport de signal sur interférence plus bruit, SINR, obtenu pour une transmission de liaison montante depuis le dispositif sans fil (12) au nœud d'accès radio (14) et un SINR souhaité ; un rapport de marge de puissance, PHR, reçu en provenance du dispositif sans fil (12) ; et une configuration de porteuse composante pour le dispositif sans fil (12).

14. Dispositif sans fil (12) activé pour fonctionner dans un réseau de communication cellulaire (10), comprenant :

un émetteur-récepteur (24) ;
un processeur (20) ; et
une mémoire (22) stockant des instructions exécutables par le processeur (20) de telle manière que le dispositif sans fil (12) soit utilisable pour :

recevoir, par l'intermédiaire de l'émetteur-récepteur (24), un indicateur de regroupement transmis depuis une station de base (14) en réponse à un déclenchement sur la base de conditions de fonctionnement actuelles, l'indicateur de regroupement indiquant qu'un schéma de transmission utilisé par le dispositif sans fil (12) pour une transmission d'un canal de commande de liaison montante doit être changé ; et
à la réception de l'indicateur, changer le schéma de transmission utilisé par le dispositif sans fil (12) pour une transmission du canal de commande de liaison montante en fonction de l'indicateur de regroupement, dans lequel l'indicateur de regroupement indique que le schéma de transmission doit utiliser un schéma de regroupement comprenant un regroupement dans le domaine spatial,
dans lequel le déclenchement est un ou plusieurs d'un groupe se composant de : un écart entre un rapport de signal sur interférence plus bruit, SINR, obtenu pour une transmission de liaison montante depuis le dispositif sans fil (12) au nœud d'accès radio (14) et un SINR souhaité ; un rapport de marge de puissance, PHR, reçu en provenance du dispositif sans fil (12) ; et une configuration de porteuse composante pour le dispositif sans fil (12).

15. Programme informatique comprenant des instructions qui, lorsqu'elles sont exécutées sur au moins un processeur, amènent l'au moins un processeur à effectuer le procédé selon la revendication 13.

*FIG. 1*

EP 3 281 339 B1

*FIG. 2*

26

12

TRANSCEIVER
24

DEVICE
PROCESSOR
20

MEMORY
22

**FIG. 3**

14

36

NODE
PROCESSOR
28

NETWORK
INTERFACE
32

TRANSCEVIER
34

MEMORY
30

**FIG. 4**

eNB SENDS INDICATION TO UE TO
INSTRUCT UE TO SWITCH
TRANSMSISION METHOD FOR PUCCH
100

UE SWITCHES TRANSMSISION
METHOD FOR PUCCH ACCORDING TO
RECEIVED INDICATION
102

*FIG. 5*

**FIG. 6**

WD
12

BS
14

300. MAKE DECISION AS TO WHETHER TO SWITCH PUCCH TRANSMIT METHOD (E.G., BASED ON ONE OR MORE PREDEFINED RULES)

302. SWITCH PUCCH TRANSMIT METHOD ACCORDING TO DECISION

304. INDICATOR (E.G., VIA UCI)

306. PUCCH

308. PUCCH DETECTION (E.G., ENHANCED PUCCH DETECTION)

*FIG. 7*

**FIG. 8**

BASE STATION
14

MODULE(S)
66

**FIG. 9**

WIRELESS DEVICE
12

MODULE(S)
68

**FIG. 10**

**EP 3 281 339 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2015076162 W
- CN 2015087000 W
- US 20140098780 A1
- US 2013114472 A1